# EUROPÄISCHE PATENTSCHRIFT

(11) **EP 1 375 980 B1**
(45) Veröffentlichungstag und Bekanntmachung des Hinweises auf die Patenterteilung: **13.06.2012**
(21) Anmeldenummer: 03021364.9
(22) Anmeldetag: 03.12.1997
(51) Int. Cl.: F16H 61/12

(54) **Verfahren und Vorrichtung zur Früherkennung von Störfällen beim Betrieb automatischer Getriebe**
Method and apparatus for early detection of errors during operation of automatic transmissions
Procédé et dispositif pour la reconnaissance anticipée des pannes lors du fonctionnement de transmissions automatiques

(30) Priorität: 17.12.1996 DE 19652212
(43) Veröffentlichungstag der Anmeldung: 02.01.2004
(62) Teilanmeldung aus: 97121215.4
(73) Patentinhaber: Voith Turbo GmbH & Co. KG, 89522 Heidenheim (DE)
(72) Erfinder: Depping, Herbert, 89537 Giengen (DE); Häberle, Friedrich, 89518 Heidenheim (DE); Rotter, Erwin, 89564 Nattheim (DE); Schempp, Volker, 73271 Holzmaden (DE); Maier, Wilfried, 89518 Heidenheim (DE)
(74) Vertreter: Dr. Weitzel & Partner

(56) Entgegenhaltungen:
- EP-A- 0 176 750
- EP-A- 0 668 456
- WO-A-97/08479
- DE-A- 4 110 910
- DE-A- 4 217 270
- US-A- 4 653 350
- US-A- 4 982 621
- US-A- 5 293 789

## Beschreibung

Die Erfindung betrifft ein Verfahren zur Früherkennung von Störfällen beim Betrieb automatischer Getriebe mit vorzugsweise elektrohydraulisch betätigbaren Reibelementen, im einzelnen mit den Merkmalen aus dem Oberbegriff des Anspruchs 1; ferner eine Steuervorrichtung für ein automatisches Getriebe.

Automatische Getriebe, insbesondere automatische Fahrzeuggetriebe, sind in einer Vielzahl von Ausführungen bekannt. Diese können als rein mechanisches Getriebe, als Kombination wenigstens eines mechanischen Getriebeteiles mit einem hydraulischen Getriebeteil, eines mechanischen Getriebeteiles mit einem elektrischen Getriebeteil oder aber als stufenloses mechanisches Getriebe vorliegen. Der hydraulische Getriebeteil kann dabei entweder als hydrostatisches Getriebe oder aber als hydrodynamisches Bauelement ausgeführt sein. Getriebe, welche wenigstens zwei unterschiedliche Getriebeteile umfassen, arbeiten entweder in Reihe geschalten und/oder mit Leistungsverzweigung, d.h. es besteht die Möglichkeit, die gesamte zu übertragende Leistung über lediglich einen der beiden Getriebeteile zu übertragen. Derartige Getriebe sind beispielsweise aus den folgenden Druckschriften bekannt:
1. J.M. Voith GmbH: Hydrodynamik in der Antriebstechnik, Krauskopf-Verlag 1987
2. Gerigk, Bruhn, Danner, Endruschad, Göbert, Kross, Gomol: Kraftfahrzeugtechnik, Westermann-Verlag 1994

Gattungsgemäßen DE 41 10 910 A1 sowie DE 42 17 270 A1 beschreiben jeweils eine Steuervorrichtung eines Fahrzeuggetriebes, mittels dem ein Soll-Ist-Vergleich einer den Schaltvorgang wenigstens mittelbar charakterisierenden Größe durchgeführt wird. Bei einer Abweichung wird eine Stellgröße entsprechend geändert, wobei für die Abweichung Grenzwerte in der Steuervorrichtung hinterlegt sind.

In Fahrzeuggetrieben finden hauptsächlich Getriebe mit einem hydrodynamischen Getriebeteil und einem nachgeschalteten mechanischen Getriebeteil Verwendung. Des weiteren werden vereinzelt auch stufenlose Getriebe in Form eines Zugmittelgetriebes mit Schubgliederband eingesetzt.

Bei automatischen Getrieben erfolgt bei Betätigung des Gangschalthebels über einen Elektrokontakt die Betätigung eines Steuerventiles, welches auf die einzelnen Schaltelemente einwirkt. Bei den vollautomatischen Getrieben werden die Gänge über eine hydraulische oder elektro-hydraulische Steuerungseinrichtung automatisch in Abhängigkeit von der Motorbelastung und der Fahrzeuggeschwindigkeit geschaltet. Die Schaltung geschieht dabei mit Hilfe von Bremsbändern und Mehrscheibenkupplungen unter Last. Als Schaltelemente finden hauptsächlich hydraulisch betätigte Reibelemente, vorzugsweise in Form einer Lamellen- oder Scheibenkupplung - und/oder Bremse, Anwendung. Diese übernehmen die Aufgabe, den Kraftfluß im Getriebe entsprechend dem geschalteten Gang herzustellen oder zu unterbrechen.

Im allgemeinen werden die Schaltventile der Schaltelemente, welche die Aufgabe haben, die Öldrücke zu den Betätigungseinrichtungen, d.h. den Schaltelementen zu steuern, für die einzelnen Gangstufen durch verschiedene Drücke beeinflußt. Dazu wird die Fahrgeschwindigkeit indirekt an der Getriebeausgangswelle mit einem Fliehkraftregler gemessen. Die Meßergebnisse werden als entsprechende Reglerdrücke an ein Steuergerät geleitet. Das Motordrehmoment wird über den Saugrohrunterdruck ermittelt und als entsprechender Modulatordruck an das Steuergerät weitergeleitet. Dort beeinflussen die Drücke die Stellung der Schaltventile.

Die Lage der Schaltpunkte hängt dabei im wesentlichen von der Fahrgeschwindigkeit und dem Motordrehmoment ab. Eine hohe Fahrgeschwindigkeit bedeutet eine hohe Drehzahl der Abtriebswelle und damit ein hoher Reglerdruck. Des weiteren bedeutet ein hohes Motordrehmoment einen niedrigen Unterdruck im Ansaugrohr des Motors und damit einen hohen Modulatordruck sowie umgekehrt. Diese Drücke wirken auf die Schaltventile. Die Schaltventile haben dann die Aufgabe, die Öldrücke zu den Betätigungseinrichtungen zu steuern. Dies geschieht in Abhängigkeit vom Schaltprogramm und der Fahrsituation. Im einzelnen bedeutet dies, daß in der Ruhestellung die Schaltventile meist nur federbelastet sind. Die durch Regler und Modulatordruck erzeugten Kräfte an den äußeren Kolben der Schaltventile bestimmen deren Stellung. Bei Stillstand des Fahrzeuges und laufenden Motor wirken nur die Federkraft und die aus dem Modulatordruck entstehende Modulatorkraft auf die Schaltventile. Erhöht sich z. B. mit steigender Fahrgeschwindigkeit bei konstanter Drosselklappenstellung der Reglerdruck, so wird der Schaltkolben bei der im Schaltprogramm festgelegten Fahrzeuggeschwindigkeit in die Stellung für den nächsthöheren Gang geschoben. Bei Erreichen einer festgelegten Fahrgeschwindigkeit ist der Reglerdruck so weit angestiegen, daß dann das nächste Schaltventil gegen den Modulatordruck in den nächsthöheren Gang geschaltet wird. Derzeit werden für vollautomatische Getriebe auch elektro-hydraulische Steuerungen verwendet. Die Hydraulik übernimmt dabei weiterhin die Betätigung der Schaltelemente, während die Steuerung der Schaltvorgänge elektronisch erfolgt. Dies bietet den Vorteil, daß zum einen mehrere Schaltprogramme, beliebige Schaltkennlinien sowie eine vereinfachte Hydraulik und eine Kombination von Getriebe und Motorelektronik möglich ist. Eine ständige Weiterentwicklung der Schaltprogramme ermöglicht eine optimale Anpassung und Reaktion auf äußere Einflüsse.

Störungen an automatischen Getrieben machen sich besonders bemerkbar durch auffällige Getriebegeräusche und nicht einwandfrei ablaufende Schaltvorgänge. Zur Erkennung der Ursachen von Schaltstörungen ist es bakannt, den Modulator, Regler- und Arbeitsdruck zu prüfen. Das Getriebe wird dazu mit den notwendigen Prüfanschlüssen versehen, an die Prüfgeräte mit verschiedenen Meßbereichen angeschlossen werden können. Der Modulator- und Arbeitsdruck können im Stand bei laufendem Motor überprüft werden. Die Messung des Reglerdruckes muß jedoch während der Fahrt oder auf dem Rollenprüfstand erfolgen. Meist erfolgt jedoch die Diagnose erst, nachdem bereits Schaltstörungen aufgetreten sind, im einzelnen bereits auffällige Getriebegeräusche zu einem erhöhten Verschleiß der Reibelemente geführt haben. Indikatoren zur Ermittlung von Schaltstörungen sind somit Störungen im Betrieb des automatischen Getriebes, welche bereits von einer Schädigung herrühren. Zur Beseitigung sind dann in der Regel Bauteilaustauschmaßnahmen erforderlich.

Der Erfindung liegt deshalb die Aufgabe zugrunde, ein Verfahren zur frühzeitigen Erkennung von Störfaktoren beim Betrieb eines automatischen Getriebes zu entwickeln, das es ermöglicht, Schädigungen aufgrund äußerer Einflüsse oder anderer Störfaktoren möglichst gering zu halten oder gänzlich zu vermeiden.

Die erfindungsgemäße Lösung der Aufgabe ist durch die Merkmale des Anspruchs 1 charakterisiert. Vorteilhafte Ausgestaltungen sind in den Unteransprüchen wiedergegeben. Die vorrichtungsmäßige Umsetzung ist durch die Merkmale des Anspruches 11 gekennzeichnet.

Erfindungsgemäß erfolgt die Schadensfrüherkennung über geeignete Indikatoren, mittels welcher Veränderungen am Getriebe, der Druckmittelversorgung sowie der zur Getriebesteuerung gehörenden Bauteile frühzeitig ermittelt werden können. Dazu wird während des Betriebes des automatischen Getriebes ein aktueller Istwert wenigstens einer, einen Schaltvorgang wenigstens mittelbar charakterisierenden Größe bei jedem Schaltvorgang ermittelt. Dieser Istwert wird mit wenigstens einem Sollwert für gleichartige Schaltvorgänge verglichen. Bei Abweichung wird die Stellgröße zur Beaufschlagung der Reibelemente zur wenigstens mittelbaren Beeinflussung der den Schaltvorgang charakterisierenden Größe geändert. Entsprechend der Erfindung ist wenigstens ein Grenzwert für den istwert einer den Schaltvorgang wenigstens mittelbar charakterisierenden Größe und/oder wenigstens ein Grenzwert für eine das Änderungsverhalten des lstwertes über eine Mehrzahl von hintereinander vorgenommenen gleichartigen Schaltungen, d.h. von einer ersten bestimmten Schaltstufe in eine nächste zweite Schaltstufe, wenigstens mittelbar charakterisierende Größe festsetzbar. Es besteht dabei die Möglichkeit lediglich einen Grenzwert festzusetzen oder aber einen oberen und einen unteren Grenzwert. Den Grenzwerten sind dabei Kriterien zugeordnet, welche ein zulaßbares Verhalten des Istwertes gegenüber dem Grenzwert charakterisieren. Bei Abweichung des Grenzwertes vom Istwert derart, daß diese Kriterien nicht mehr erfüllt sind, wird eine Fehlermeldung erzeugt bzw. ein Fehlersignal gebildet. Die Kriterien für den Vergleich der Istwerte bzw. des Änderungsverhaltens des istwertes mit dem Grenzwert oder den Grenzwerten bringen dabei zum Ausdruck, daß mit dem Grenzwert bzw. den Grenzwerten ein bestimmter lstwertbereich abgedeckt werden soll, innerhalb dessen der Betrieb unschädlich für das Getriebe ist.

Die den Schaltvorgang wenigstens mittelbar charakterisierende Größe kann auch von einer Stellgröße gebildet werden.

Vorzugsweise handelt es sich bei den Grenzwerten für die den Istwert der den Schaltvorgang wenigstens mittelbar charakterisierenden Größe um einen Maximalwert, welcher nicht überschritten werden darf. Minimalwerte sind ebenfalls möglich. Als die den Schaltvorgang wenigstens mittelbar charakterisierenden Größen kommen im wesentlichen
1) die einzelnen, zur Beurteilung eines Schaltvorganges wesentlichen Zeitbereiche zur Charakterisierung dessen Ablaufes und/oder
2) die, die Reibelemente wenigstens mittelbar beaufschlagenden Drücke in Betracht.

Erfaßbare und/oder bestimmbare Zeitbereiche sind vorzugsweise
1) t_{UReal} = Zeitdauer vom Abgeben eines Gangwechselsignals bis zum Beginn der Synchronisation der Reibelemente;
2) t_{Rutsch} = Rutschzeit der Reibelemente.

Weitere Möglichkeiten bestehen in der Ermittlung der folgenden Größen:
3) PATIME = Zeit, in welcher der Anfangsdruckwert auf den Regeldruckwert linear oder degressiv ansteigt oder abfällt;
4) TMAX = Zeit, nach der der Sicherheitsdruckhochlauf beginnt und nach deren Ablauf der Synchronisiervorgang abgeschlossen sein sollte;
5) TSCHALT-ENDE = Zeit, nach der der Betriebsdruck anliegt.

Bei den genannten Drücken handelt es sich zum einen um den Anfangsdruckwert, d.h. ein im Bereich des Zeitpunktes vom Abgeben eines Gangschaltsignales erhöhter und den Reibelementen zugeführter Druckwert, und/oder den zu Beginn des Synchronisiervorganges anliegenden Regeldruckwert und/oder die Verläufe der vorgenannten Größen. Diese stellen im allgemeinen auch die Stellgrößen für die Einsteuerung bestimmter Zeitintervalle für gleichartige Schaltungen dar. Der Anfangsdruckwertverlauf kann während des Zeitpunktes vom Abgeben eines Gangwechselsignales bis zum Beginn des Synchronisiervorganges einen linearen Verlauf, d.h. je nach Art des Schaltvorganges ansteigend oder abfallend sein. Es besteht jedoch auch die Möglichkeit, den Anfangsdruckwert bis zum Zeitpunkt des Synchronisiervorganges konstant zu halten. Eine Änderung bezüglich des Anfangsdruckwertes bezieht sich dabei immer auf eine Änderung des Druckwertes zur Anpressung der Reibelemente in einem Zeitraum vom Abgeben eines Gangwechselsignales bis zum Beginn des Synchronsiervorganges. In Analogie gilt diese Aussage auch für den Regeldruckwertverlauf, allerdings erst mit Beginn der Synchronisation.

Es genügt dabei die Erfassung einer den Schaltvorgang wenigstens mittelbar charakterisierenden Größe. Denkbar sind jedoch auch die Erfassung einer Vielzahl, wenigstens jedoch zweier verschiedener Größen, wobei zusätzlich Prioritäten zwischen den Istgrößen hinsichtlich deren Verhaltens gegenüber den jeweiligen Grenzwerten vereinbart werden können.

Die erfindungsgemäße Lösung ermöglicht es, eine Früherkennung von Störfällen während des Betriebes automatischer Getriebe ohne zusätzlichen Aufwand mit der bereits vorhandenen Getriebesteuerung durchzuführen, indem die den Schaltvorgang wenigstens mittelbar charakterisierenden Größen, insbesondere bei adaptiv gestalteten Schaltprogrammen, gleichzeitig als Indikatoren für eine mögliche Störung verwendet werden. Eine Früherkennung durch auffällige Veränderung dieser den Schaltvorgang wenigstens mittelbar charakterisierenden Größen erfolgt dabei während des Betriebes des automatischen Getriebes. Eine Schädigung des Getriebes kann dann durch mögliche anschließend vorzunehmende Diagnosemaßnahmen vermieden werden. Im Gegensatz zum Stand der Technik, bei welchem Indikatoren zur Erkennung von Störfällen verwendet werden, die bereits auf Schädigungen des Getriebes oder aber der mit diesem verbundenen Komponenten beruhen, können mit dem erfindungsgemäßen Verfahren Schädigungen von vornherein fast vollständig ausgeschlossen werden. Ein besonderer Vorteil des erfindungsgemäßen Verfahrens besteht darin, daß bezüglich der vorrichtungsmäßigen Umsetzung keine zusätzlichen Maßnahmen zur ansonsten üblicherweise eingesetzten Getriebesteuerung eines automatischen Fahrzeuggetriebes erforderlich sind. Lediglich bezüglich der Verarbeitung der den Schaltvorgang wenigstens mittelbar charakterisierenden Größen sind in der Steuereinrichtung zusätzliche Mittel vorzusehen, welche einen Vergleich mit einem Grenzwert ermöglichen. Im einfachsten Fall kann dies durch eine abzuarbeitende Routine von einer elektronischen Steuer- bzw. Regeleinheit ausgeführt werden. Die erfindungsgemäße Lösung ist damit sehr kostengünstig und auf einfache Art und Weise in bereits vorhandenen Getriebesteuerungen nachrüstbar.

Für die Verarbeitung des Fehlersignales bestehen folgende Möglichkeiten:
1. Anzeige oder akustisches Signal und/oder
2. Verarbeitung des Fehlersignales als Eingangssignal zur Ansteuerung des Getriebes, oder aber einer mit dem Getriebe gekoppelten Komponente, um den Gefahrenzustand zu beseitigen.

Im einzelnen besteht des weiteren die Möglichkeit, die Steuerung derart zu gestalten, daß beispielsweise rein rechnerisch zuerst die Stellgröße ermittelt wird, ein Vergleich mit dem Grenzwert durchgeführt wird und bei Überschreitung bzw. Nichterfüllung der zugelassenen Kriterien, eine Fehlermitteilung erzeugt wird, jedoch gleichzeitig diese Stellgröße am Ausgang der Steuereinrichtung nicht ausgegeben wird, d.h. daß lediglich eine Überschreitung der Grenzwerte verhindert wird.

Im allgemeinen reicht bereits eine den Schaltvorgang wenigstens mittelbar charakterisierende Größe aus, welche zur Überwachung fortlaufend ermittelt wird.

Vorzugsweise erfolgt eine Änderung der Stellgröße zur Beeinflussung der den Schaltvorgang charakterisierenden Größe adaptiv. Derartige Konzepte sind beispielsweise bereits aus den folgenden Druckschriften bekannt:

| | |
|---|---|
| 1. | DE 19 32 986 C |
| 2. | DE 32 05 767 C |
| 3. | EP 0 176 750 B2 |
| 4. | EP 0 435 372 B1. |

In diesen Druckschriften sind Verfahren beschrieben, welche bei Nichterreichen der Sollwertvorgaben für bestimmte Zeitbereiche eine Korrektur des Regeldruckes durch Druckwertänderungen bei der nächsten Schaltung realisieren. Vorzugsweise werden bei diesen Adaptionskonzepten die nachfolgend genannten Größen als Indikatoren für eine mögliche Schädigung herangezogen:

| | | |
|---|---|---|
| 1) | t_{UReal} = | Zeitdauer vom Abgeben eines Gangwechselsignals bis zum Beginn der Synchronisation der Reibelemente |
| 2) | t_{Rutsch} = | Rutschzeit der Reibelemente |
| 3) | PA = | Anfangsdruckwert |
| 4) | PR = | Regeldruck |

Der Anfangsdruck PA beeinflußt dabei primär die Zeitdauer t_{UReal}, während der Regeldruck als primärer Einflußfaktor für die Rutschzeit der Reibelemente t_{Rutsch} verwendet wird. Diese Indikatoren werden entweder einzeln als lstwertgrößen überwacht oder aber in verschiedener Kombination miteinander. Es besteht des weiteren auch hier die Möglichkeit, andere als diese bevorzugten Indikatoren zur Überwachung zu nutzen. Diese können beispielsweise die Zeitdauer, nach welcher der Schaltvorgang abgeschlossen ist t_{synchron}, die Zeitdauer, nach der der Sicherheitsdruckhochlauf beginnt und nach deren Ablauf der Synchronsiervorgang abgeschlossen sein sollte TMAX oder aber die Zeitdauer, nach der der Betriebsdruck wieder anliegt, T-Schaltende sein.

Werden die Sollwertvorgaben für die Indikatoren nicht erreicht, erfolgt ebeispielsweise zuerst eine Korrektur des Anfangs- und/oder Regeldruckwertes durch Druckwertänderungen, um einen bestimmten Korrekturwert ΔPR und/oder ΔPA bei der nächsten gleichartigen Schaltung. Dies wird über eine Vielzahl von Schaltvorgängen beim immer wieder gleichartigen Übergang von einer bestimmten ersten Schaltstufe in eine bestimmte zweite Schaltstufe realisiert, und zwar so lange, bis die Sollwertvorgabe für die Indikatoren, insbesondere für die einzelnen Zeitdauern, erreicht ist. Bei Über- oder Unterschreitung bestimmter für diese Istwerte vorgebbarer Grenzwerte kann auf eine Gefährdung des Getriebes geschlossen werden. In Anologie gilt dies auch bei Verwendung der Stellgrößen PA und PR als Indikatoren. In diesem Fall kann nach entsprechender Fehlermeldung entweder eine ausführliche Diagose des Getriebes bzw. der mit dem Getriebe gekoppelten Komponenten vorgenommen werden. Andererseits besteht jedoch auch die Möglichkeit, bei Gefährdungen, die durch Getriebesteueraktionen hervorgerufen werden können, diese über die Getriebesteuerung direkt zu regulieren.

Eine weitere Möglichkeit besteht darin, das Verhalten der lstgrößen einer den Schaltvorgang wenigstens mittelbar charakterisierenden Größe über eine Mehrzahl von Schaltvorgängen zu erfassen und bei einer übermäßig starken Änderung, d.h. beispielsweise einer Überschreitung eines Änderungsfaktors, welcher aus dem Quotienten aus der Änderung der Stellgröße und der Anzahl der Schaltvorgänge, über welche dieses Änderungsverhalten ermittelt wird, gebildet wird, ebenfalls eine Fehlermeldung zu erzeugen.

Die erfindungsgemäße Lösung wird nachfolgend anhand von Figuren erläutert. Es zeigen:
- Fig. 1: anhand eines Schaltverlaufsdiagrammes die Zuordnung von Grenzwerten;
- Fig. 2: eine Steuereinrichtung zur Durchführung der erfindungsgemäßen Früherkennung.

Die Figur verdeutlicht schematisch eine Steuerdruckkennlinie für Hochschaltungen in einem mechanischen Getriebe. Dazu ist der Druckverlauf über der Zeit in einem Diagramm aufgetragen. Die einzelnen Werte sind wie folgt bezeichnet:

| | |
|---|---|
| USTELLMAX | = Betriebsdruck |
| PR | = berechneter Regeldruck |
| PA | = Anfangsdruckwert |
| PATIME | = Zeit, in welcher der Anfangsdruckwert auf den Regeldruckwert linear oder degressiv ansteigt oder abfällt |
| TMAX | = Zeit, nach der der Sicherheitsdruckhochlauf beginnt und nach deren Ablauf der Synchronisiervorgang abgeschlossen sein sollte |
| TSCHALT-ENDE | = Zeit, nach der der Betriebsdruck anlegt. |

Für den Schaltvorgang sind des weiteren folgende Meß- und Regelgrößen wesentlich:

| | |
|---|---|
| n_{SYNCHRON 1} | = Motordrehzahl bei Beginn des Schaltvorganges |
| n_{SYNCHRON 2} | = Motordrehzahl nach Beendigung des Schaltvorganges |
| t_{UREAL} | = Zeit bis zu Beginn des Synchronisiervorganges |
| t_{RUTSCH} | = Rutschzeit der Lamellen |
| t_{SYNCHRON} | = Zeit, nach der der Schaltvorgang abgeschlossen wurde. |

Dem Diagramm ist zu entnehmen, daß nach dem Auftreten eines Gangschaltsignales, in der Zeitachse zum Zeitpunkt 0 die Motordrehzahl n1 noch bis zum Erreichen eines Freilaufpunktes, hier dem Punkt 1 ansteigt, worunter man den Punkt versteht, an dem die dem neuen Gang zugeordneten Reibelemente das volle Moment übernehmen während die dem alten Gang zugeordneten Reibelemente lösen. Ab diesem Freilaufpunkt beginnt die Motordrehzahl n1 abzusinken, während gleichzeitig die Reibelemente schleifen. Die Zeit bis zum Erreichen dieses Freilaufpunktes, der dem Beginn des Synchronisationsvorganges entspricht, ist mit t_{UREAL} bezeichnet. An diese schließt sich die Rutschzeit der Reibelemente t_{RUTSCH} an. Im Punkt 2 im Diagramm laufen beide Reibelemente synchron, der neue Gang ist eingelegt, die Reibelemente haften und die beiden Drehzahlen sind entweder gleich oder entsprechend dem Stufensprung identisch.

Der Schaltkomfort ist durch den Verlauf des Abtriebsmomentes bestimmt. Der Momentensprung zum Zeitpunkt t_{SYNCHRON} soll möglichst gering sein.

Der einzuhaltende Sollwert für den Schaltvorgang ist die Zeit bis zum Beginn des Synchronisationsvorganges t_{UREAL}. Die Stellgröße zur Beeinflussung dieses Zeitraumes ist der Anfangsdruckwert PA, das Stellglied eine Einrichtung zum Aufbringen des Anfangsdruckes. Zur Durchführung einer adaptiven Regelung werden die Sollwerte für die Zeit bis zum Beginn des Synchronisationsvorganges t_{UREAL} beispielsweise in einem Last/Drehzahlkennfeld abgelegt. Dabei kann prinzipiell die Rasterung für die Last- und Drehzahlklassen beliebig gewählt werden, wobei die Sollwerte in einem Festwertspeicher in einer elektronischen Getriebesteuereinheit gespeichert werden können. Des weiteren sind Meßeinrichtungen vorgesehen, welche die aktuelle Zeit bei jedem Schaltvorgang bis zu Beginn des Synchronisationsvorganges ermitteln. Als weitere Einflußparameter werden das Drehmoment je Lastgeberstellung, die Drehzahl beim Schalten sowie das Massenträgheitsmoment der einzelnen Komponenten berücksichtigt. Weicht der gemessene bzw. ermittelte Istwert vom Sollwert ab, wird ein Korrekturwert am Ausgang der Steuereinrichtung ausgegeben und an der Druckeinheit wirksam. Die Stellgröße PA ändert sich um den Korrekturwert. Der geänderte Anfangsdruckwert wird dann abgespeichert.

Eine Änderung der Stellgröße um einen festen Korrekturwert ist additativ oder multiplikativ möglich.

Andere Konzepte der Anpassung der Zeit bis zum Beginn des Synchronisationsvorganges durch Änderung des Anfangsdruckwertes sind ebenfalls denkbar.

Des weiteren besteht die Möglichkeit, die Schaltkonzeption dahingehend zu gestalten, daß auch der Regeldruck adaptiert und damit die mögliche Rutschzeit beeinflußt werden kann.

In diesem Fall kann festgelegt werden, daß umgekehrt die Regeldruckwertadaption Vorrang vor der Anfangsdruckwertadaption besitzt oder umgekehrt.

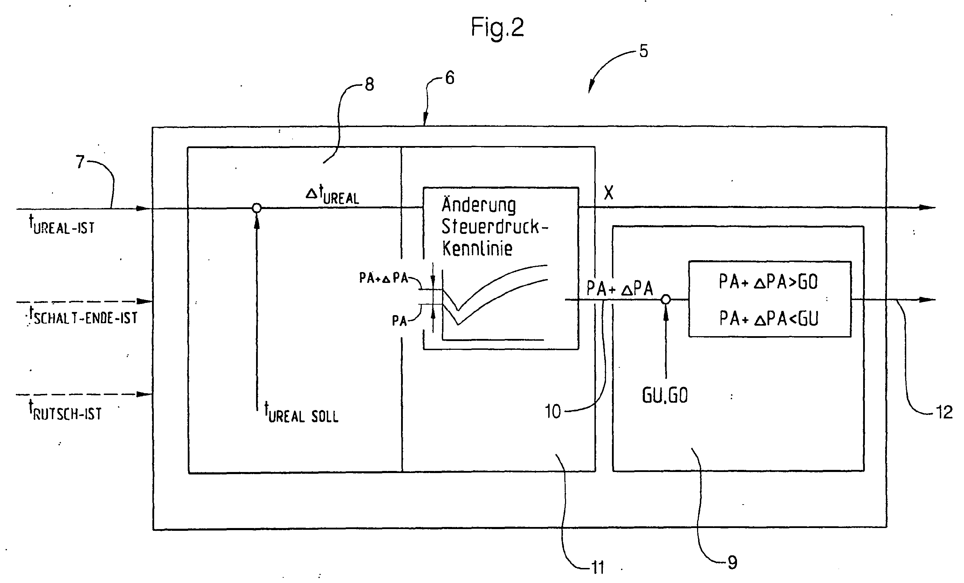

Für den Anfangsdruckwert PA können, wie anhand der Grenzwertkennlinien Gl und Gll dargestellt, ein oberer und ein unterer Grenzwert festgelegt werden, welche nicht überschritten bzw. unterschritten werden dürfen. Die adaptiv geänderten Anfangsdruckwerte werden dabei bei jedem Schaltvorgang mit den vorgegebenen Grenzwerten verglichen und bei Überschreitung von Gl und Unterschreitung von Gll wird eine Fehlermitteilung erzeugt. In Analogie kann dieser Vorgang auch für den Regeldruckwertverlauf erfolgen. Als Beispiel ist dazu ein erster oberer Grenzwert GIII für einen nicht zu überschreitenten Wert des Regeldruckes PR festsetzbar. Die Vergleiche der Stellgrößen mit den Grenzwerten können mittels einer Steuervorrichtung realisiert werden. Deren Arbeitsweise wird anhand eines Blockschaltbildes in Figur 2 verdeutlicht.

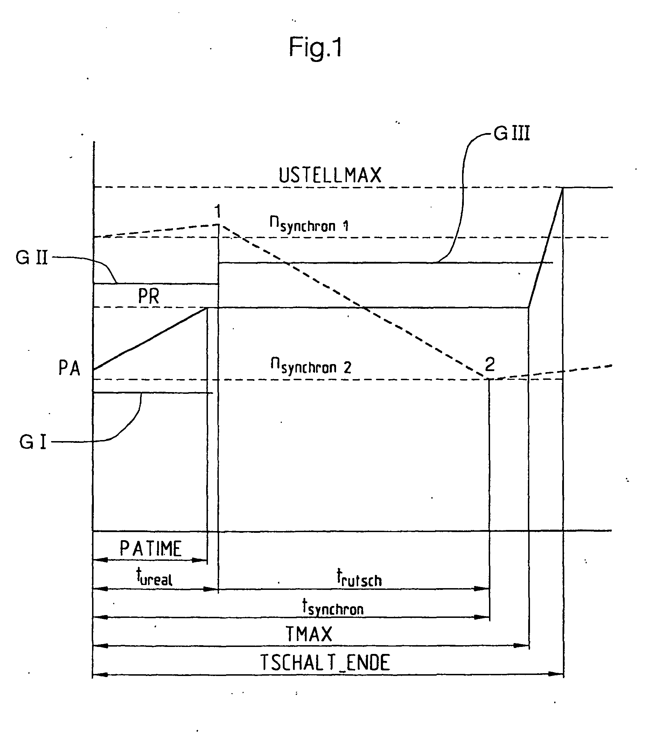

Figur 2 zeigt eine Steuervorrichtung 5. Diese umfaßt eine elektronische Steuer- und Regeleinrichtung 6. Die Steuer- bzw. Regeleinrichtung 6 umfaßt dabei wenigstens einen Eingang 7, welcher mit einer Einrichtung zur Erfassung wenigstens eines Istwertes einer den Schaltvorgang wenigstens mittelbar charakterisierenden Größe koppelbar ist. Diese Größe kann beispielsweise T_{UREAL} oder t_{RUTSCH} oder t_{SCHALT} sein. Es können aber auch mehrere dieser Größen parallel erfaßt werden. Zur Beeinflussung dieser Zeiträume erfolgt dann eine adaptive Änderung des Steuerdruckes - des Anfangssteuerdruckes und/oder des Regeldruckes. Dieser Istwert ist entsprechnd des in Figur 1 dargestellten Steuerkonzeptes dabei die Zeitdauer t_{UREAL-IST}. In der Steuer- und Regeleinrichtung 6 ist ein Vergleicher 8 integriert. Der Vergleicher 8 kann beispielsweise durch in der Steuer- und Regeleinrichtung 6 ablaufende Routinen realisiert werden. Vom Vergleicher werden beispielsweise dort abgelegte Sollwerte für die den Schaltvorgang wenigstens mittelbar charakterisierenden Größen, hier beispielsweise t_{UREAL-Soll} mit den tatsächlichen verglichen. Der Vergleich kann sich auch auf einen vorgebbaren Sollwertbereich erstrecken.

Bei Abweichung des Istwertes vom Sollwert wird der Anfangsregeldruckwert als Stellgröße beispielsweise um einen festleg- und vorgebbaren Wert geändert. Bei diesem Wert kann es sich um eine feste Größe handeln; es besteht theoretisch auch die Möglichkeit diesen Korrekturwert zu berechnen. Diese Änderung erfolgt mittels einer, dem Vergleicher 8 zugeordneten Einrichtung 11 zur Bestimmung der Änderung des Anfangsdruckwertverlaufes PA und Bildung einer Stellgröße X. Entsprechend dem Korrekturwert delta PA wird eine Stellgröße X zur Ansteuerung der Steuerdruckerzeugungseinheit am Ausgang der Steuer- bzw. Regeleinrichtung ausgegeben.

Gleichzeitig wird im dargestellten Fall der adaptiv geänderte Anfangsdruckwert PA+(delta PA) bei jedem Schaltvorgang mit einem oberen und einem unteren Grenzwert G_{O} und G_{U} für PA verglichen. Dies wird mittels eines weiteren Vergleichers 9 realisiert. Dieser weist einen Eingang 10 und einen Ausgang 12 auf. Der Eingang 10 ist dabei mit der Einrichtung 11 gekoppelt. Bei Über- bzw. Unterschreitung der Grenzwerte wird eine Fehlermeldung in Form eines Fehlersignales an einem Ausgang 12 ausgegeben.

## Patentansprüche

1. Verfahren zur Früherkennung von Störfällen beim Betrieb automatischer Fahrzeuggetriebe mit elektronisch ansteuerbaren Reibelementen zur Umschaltung zwischen verschiedenen Übersetzungsstufen,
bei welchen ein aktueller Istwert wenigstens einer den Schaltvorgang wenigstens mittelbar charakterisierenden Größen bei jedem Schaltvorgang ermittelt wird;
bei welchem der Istwert mit wenigstens einem Sollwert verglichen wird und bei Abweichung eine Stellgröße zur Beaufschlagung der Reibelemente zur wenigstens mittelbaren Beeinflussung der den Schaltvorgang wenigstens mittelbar charakterisierenden Größen geändert wird;
**gekennzeichnet durch** die folgenden Merkmale:
es ist wenigstens ein Grenzwert für wenigstens eine der nachfolgend genannten Größen festsetzbar:
- für einen Istwert der den Schaltvorgang wenigstens mittelbar charakterisierenden Größe und/oder
- für eine, das Änderungsverhalten des lstwertes über eine Mehrzahl von nacheinander vorgenommenen Schaltvorgängen wenigstens mittelbar charakterisierende Größe und/oder
- für die Stellgröße und/oder
- für das Änderungsverhalten der Stellgröße über eine Mehrzahl von nacheinander vorgenommenen gleichartigen Schaltvargängen;
dem Grenzwert sind Kriterien hinsichtlich seiner Größe gegenüber dem Istwert oder der Stellgröße zugeordnet;
bei Abweichung des Grenzwertes vom Istwert oder der.Stellgröße derart, daß die Kriterien nicht mehr erfüllt sind, wird ein Fehlersignal erzeugt, **dadurch gekennzeichnet dass** die den Schaltvorgang charakterisierende Größe vom Anfangsdruckwert zum Aufbringen der erforderlichen Anpreßkraft der kraftschlüssig miteinander koppelbaren Reibelemente gebildet wird.

2. Verfahren zur Früherkennung von Störfällen nach Anspruch 1, **dadurch gekennzeichnet, daß** das Fehlersignal als Fehlermeldung über ein Display für den Fahrer sichtbar ist.

3. Verfahren zur Früherkennung von Störfällen nach einem der Ansprüche 1 oder 2, **dadurch gekennzeichnet, daß** das Fehlersignal dem Fahrer akustisch übermittelt wird.

4. Verfahren zur Früherkennung von Störfällen nach einem der Ansprüche 1 bis 3, **dadurch gekennzeichnet, daß** das Fehlersignal als Eingangsgröße zur Ansteuerung des Getriebes gesetzt wird.

5. Verfahren zur Früherkennung von Störfällen nach einem der Ansprüche 1 bis 4, **dadurch gekennzeichnet, daß** bei Abweichung des lstwertes vom Sollwert die Stellgröße zur wenigstens mittelbaren Beeinflussung der den Schaltvorgang charakterisierenden Größe um einen Korrekturwert geändert wird.

6. Verfahren zur Früherkennung von Störfällen nach Anspruch 5, **dadurch gekennzeichnet, daß** die Änderung der Stellgröße um einen festen unveränderbaren Korrekturwert erfolgt.

7. Verfahren zur Früherkennung von Störfällen nach Anspruch 5, **dadurch gekennzeichnet, daß** die Änderung der Stellgröße um einen berechenbaren Korrekturwert erfolgt.

8. Verfahren zur Früherkennung von Störfällen nach Anspruch 7, **dadurch gekennzeichnet, daß** der Korrekturwert als Mittelwert einer bestimmbaren Vielzahl von hintereinander vorgenommenen gleichartigen Schaltvorgängen ermittelt wird.

9. Verfahren zur Früherkennung von Störfällen nach einem der Ansprüche 1 bis 8, **dadurch gekennzeichnet, daß** als Kriterium für den Grenzwert ein bestimmter einzuhaltender Wertebereich festgelegt wird.

10. Verfahren zur Früherkennung von Störfällen nach einem der Ansprüche 1 bis 9, **dadurch gekennzeichnet, daß** der Grenzwert für das Änderungsverhalten des Istwertes einer den Schaltvorgang wenigstens mittelbar charakterisierenden Größe ein bestimmbarer Quotient aus der Anzahl der Korrekturen zur Anzahl gleichartiger nacheinander vorgenommener Umschaltvorgänge ist.

11. Steuervorrichtung (5)
mit wenigstens einem Eingang (10) und zwei Ausgängen (12)- einem ersten Ausgang und einem zweiten Ausgang:
mit einer Steuer- und Regeleinrichtung (6),
die Steuer- und Regeleinrichtung (6) ist wenigstens mit dem einen Eingang (10) und dem ersten Ausgang gekoppelt;
der Eingang (10) ist mit einer Einrichtung zur Erfassung eines Istwertes einer den Schaltvorgang wenigstens mittelbar charakterisierenden Größe koppelbar;
die Steuer- und Regeleinrichtung (6) umfaßt wenigstens eine erste Vergleichseinrichtung zum Vergleich des Istwertes der den Schaltvorgang wenigstens mittelbar charakterisierenden Größe mit einem Sollwert und eine Einrichtung zur Bildung einer Stellgröße, welche an dem ersten, mit einem Stellglied wenigstens mittelbar koppelbaren Ausgang der Steuervorrichtung (5) ausgebbar ist;
mit einer mit der Steuer- und Regelvorrichtung (6) koppelbaren weiteren zweiten Vergleichseinrichtung zum Vergleich wenigstens einer der nachfolgend genannten Größen mit wenigstens einem, dafür festlegbaren Grenzwert
- des Istwertes der den Schaltvorgang wenigstens mittelbar charakterisierenden Größe und/oder
- eines Istwertes einer das Änderungsverhalten des Istwertes über eine Mehrzahl von nacheinander vorgenommenen Schaltvorgängen wenigstens mittelbar charakterisierende Größe
und/oder
- der Istwert der Stellgröße und/oder
- eines lstwertes einer das Änderungsverhalten der Stellgröße über eine Mehrzahl von nacheinander vorgenommenen gleichartigen Schaltvorgängen;
die zweite Vergleichseinrichtung ist mit dem zweiten Ausgang zur Ausgabe eines Fehlersignals verbunden; **dadurch gekennzeichnet, dass** die Steuer-vorrichtung (5) zur Durchführung des Verfahrens gemäß einem der Ansprüche 1 bis 10 eingerichtet ist.

12. Steuervorrichtung (5) nach Anspruch 11, **dadurch gekennzeichnet, daß** die Steuer- und Regeleinrichtung (6) und die zweite Vergleichseinrichtung in einem gemeinsamen Steuer- und Regelgerät integriert sind.

## Claims

1. A method of early recognition of abnormal occurrences during the operation of automatic vehicle transmissions with electronically controllable friction elements for switching between different gear ratios, in which a current actual value at least of one values characterising at least indirectly the gear change is determined at every gear change;
in which the actual value is compared with at least one reference value and in case of deviation a correction value for operating the friction elements is modified for influencing at least indirectly the values characterising at least indirectly said gear change;
**characterised by** the following features: at least one threshold can be set for at least one of the values mentioned below:
- for an actual value of the value at least indirectly characterising the gear change and/or
- for a value characterising at least indirectly the change behaviour of the actual value via a plurality of gear changes performed after one another and/or
- for the control variable and/or
- for the change behaviour of the control variable via a plurality of identical gear changes performed after one another;
criteria are allocated to the threshold as regards its value with respect to the actual value or the correction variable;
in case of deviation between the threshold with respect to the actual value or to the control variable in such a way that the criteria are no longer met, an error signal is generated, **characterised in that** the value characterising the gear change consists of the initial pressure value for applying the necessary contact pressing force of the friction elements which can be coupled to each other in a friction locking manner.

2. A method of early recognition of abnormal occurrences according to claim 1, **characterised in that** the error signal can be seen as an error message via a display by the driver.

3. A method of early recognition of abnormal occurrences according to one of claims 1 or 2, **characterised in that** the error signal is transferred acoustically to the driver.

4. A method of early recognition of abnormal occurrences according to one of claims 1 to 3, **characterised in that** the error signal is set as an initial value for operating the transmission.

5. A method of early recognition of abnormal occurrences according to one of claims 1 to 4, **characterised in that** in case of deviation between the actual value and the reference value, the control variable for at least indirectly influencing the value characterising the gear change is modified by a correction value.

6. A method of early recognition of abnormal occurrences according to claim 5, **characterised in that** the control variable is modified by a fixed correction value which cannot be changed.

7. A method of early recognition of abnormal occurrences according to claim 5, **characterised in** the control variable is modified by a computable correction value.

8. A method of early recognition of abnormal occurrences according to claim 7, **characterised in that** the correction value is determined as an average of a definable plurality of identical gear changes performed after one another.

9. A method of early recognition of abnormal occurrences according to one of claims 1 to 8, **characterised in that** a given range of values, which should be respected, is determined as a criterion for said threshold.

10. A method of early recognition of abnormal occurrences according to one of claims 1 to 9, **characterised in that** the threshold for the change behaviour of the actual value of the value at least indirectly characterising the gear change is a definable quotient of the number of corrections to the number of identical gear changes performed after one another.

11. A control device (5),
with at least one input (10) and two outputs (12) - a first output and a second output;
with a control and regulation device (6),
the control and regulation device (6) is coupled at least to said input (10) and to the first output;
the input (10) can be coupled to a device for obtaining an actual value of a value at least indirectly characterising the gear change; the control and regulation device (6) includes at least one first comparison device for comparing the actual value of the value at least indirectly characterising the gear change to a reference value and a device to produce a control variable, which is displayable on the first output of the control device (5), an output which can be coupled at least indirectly to a control member; with a second comparison device which can be coupled additionally to the control and regulation device (6) for comparing at least one of the values mentioned below with at least one threshold, which can be determined to that end, of the actual value of the value at least indirectly characterising the gear change and/or
of an actual value of a variable characterising at least indirectly the change behaviour of the actual value via a plurality of gear changes performed after one another and/or
and/or the actual value of the control variable and/or
of an actual value of a value characterising the change behaviour of the control variable via a plurality of gear changes performed after one another;
the second comparison device is connected to the second output for generating an error signal; **characterised in that** the control device (5) is designed for implementing the process according to one of the claims 1 to 10.

12. The control device (5) according to claim 11, **characterised in that** the control and regulation device (6) and the second comparison device are integrated in a common control and regulation apparatus.

## Revendications

1. Procédé de reconnaissance anticipée de défaillances pendant le fonctionnement de transmissions automatiques présentant des éléments de friction à commande électronique permettant de passer d'un rapport de transmission à l'autre, dans lequel on détermine lors de chaque changement de vitesses une valeur réelle courante d'au moins une valeur caractérisant au moins indirectement le changement de vitesses ;
dans lequel on compare la valeur réelle avec au moins une valeur de consigne et en présence d'un écart on modifie une variable de réglage pour solliciter les éléments de frictions et ainsi influencer au moins indirectement les valeurs caractérisant au moins indirectement le changement de vitesses; présentant les caractéristiques suivantes:
au moins un seuil peut être fixé pour au moins l'une des valeurs mentionnées ci-dessous:
- pour une valeur réelle de la variable caractérisant au moins indirectement le changement de vitesses et/ou
- pour une valeur caractérisant au moins indirectement le comportement de changement de la valeur réelle par le biais d'une pluralité de changements de vitesses réalisés l'un après l'autre,
- pour la variable de réglage et/ou
- pour le comportement de changement de la variable de réglage par le biais d'une pluralité de changements de vitesses identiques réalisés l'un après l'autre;
des critères sont affectés à la valeur du seuil par rapport à la valeur réelle ou la variable de réglage;
en présence d'un écart du seuil par rapport à la valeur réelle ou la variable de réglage de telle sorte que les critères ne sont pas remplis, un signal d'erreur est généré, **caractérisé en ce que** la valeur caractérisant le changement de vitesses comprend la valeur de pression initiale permettant d'appliquer la pression de contact initiale nécessaire aux éléments de frictions pouvant s'accoupler les uns aux autres par liaison de force.

2. Procédé de reconnaissance anticipée de défaillances selon la revendication 1, **caractérisé en ce que** le signal d'erreur est visible du conducteur sous forme de message d'erreur au moyen d'un affichage.

3. Procédé de reconnaissance anticipée de défaillances selon l'une des revendications 1 ou 2, **caractérisé en ce que** le signal d'erreur est transféré acoustiquement au conducteur.

4. Procédé de reconnaissance anticipée de défaillances selon l'une des revendications 1 à 3, **caractérisé en ce que** le signal d'erreur est défini comme valeur d'entrée pour solliciter la transmission.

5. Procédé de reconnaissance anticipée de défaillances selon l'une des revendications 1 à 4, **caractérisé en ce qu'**en présence d'un écart de la valeur réelle par rapport à la valeur de consigne, on modifie selon une valeur de correction la variable de réglage pour influencer au moins indirectement la variable caractérisant le changement de vitesses.

6. Procédé de reconnaissance anticipée de défaillances selon la revendication 5, **caractérisé en ce que** la variable de réglage est modifée en fonction d'une valeur de correction fixe et impossible à modifier.

7. Procédé de reconnaissance anticipée de défaillances selon la revendication 5, **caractérisé en ce** la variable de réglage est modifiée d'une valeur de correction calculable.

8. Procédé de reconnaissance anticipée de défaillances selon la revendication 7, **caractérisé en ce que** l'on obtient la valeur de correction sous forme de moyenne d'une pluralité définissable de changements de vitesses identiques réalisés l'un après l'autre.

9. Procédé de reconnaissance anticipée de défaillances selon l'une des revendications 1 à 8, **caractérisé en ce que** l'on définit une plage de valeurs déterminée à respecter sous forme de critère pour le seuil.

10. Procédé de reconnaissance anticipée de défaillances selon l'une des revendications 1 à 9, **caractérisé en ce que** le seuil pour le comportement de changement de la valeur réelle d'une variable caractérisant au moins indirectement le changement de vitesses est un quotient définissable du nombre de corrections au nombre de changements de vitesses identiques réalisés l'un après l'autre.

11. Dispositif de commande (5),
comportant au moins une entrée (10) et deux sorties (12) - une première sortie et une seconde sortie;
un dispositif de commande et de régulation (6),
le dispositif de commande et de régulation (6) est couplé au moins à ladite entrée (10) et à la première sortie;
l'entrée (10) peut être couplée à un dispositif d'obtention d'une valeur réelle d'une variable caractérisant au moins indirectement le changement de vitesses;
le dispositif de commande et de régulation (6) comporte au moins un premier dispositif comparateur permettant la comparaison de la valeur réelle de la variable caractérisant au moins indirectement le changement de vitesses à une valeur de consigne et un dispositif de production d'une variable de réglage pouvant être générée au niveau de la première sortie du dispositif de commande (5) qui peut s'accoupler au moins indirectement à un élément de réglage;
un second dispositif comparateur supplémentaire pouvant s'accoupler au dispositif de commande et de régulation (6) permettant la comparaison d'au moins l'une des valeurs mentionnées ci-dessous avec au moins un seuil, que l'on peut définir à cet effet, seuil de la valeur réelle de la variable caractérisant au moins indirectement le changement de vitesses et/ou une valeur réelle d'une valeur caractérisant au moins indirectement le comportement de changement de la valeur réelle par le biais d'une pluralité de changements de vitesses réalisés l'un après l'autre et/ou la valeur réelle de la variable de réglage et/ou
une valeur réelle d'une valeur caractérisant le comportement de changement de la variable de réglage par le biais d'une pluralité de changements de vitesses identiques réalisés l'un après l'autre;
le second dispositif comparateur est connecté à la seconde sortie pour produire un signal d'erreur; **caractérisé en ce que** le dispositif de commande (5) est conçu pour réaliser le procédé selon l'une des revendications 1 à 10.

12. Dispositif de commande (5) selon la revendication 11, **caractérisé en ce que** le dispositif de commande et de régulation (6) et le second dispositif comparateur sont intégrés dans un appareil de commande et de régulation commun.
